# NEUE EUROPÄISCHE PATENTSCHRIFT

(11) **EP 0 046 200 B2**
(45) Veröffentlichungstag und Bekanntmachung des Hinweises auf die Entscheidung über den Einspruch: **24.08.1994**
(45) Hinweis auf die Patenterteilung: 09.10.1991
(21) Anmeldenummer: 81105662.1
(22) Anmeldetag: 18.07.1981
(51) Int. Cl.: A01B 49/02, A01B 35/14, A01B 35/30

(54) **An einem Traktor anbaubare Vorrichtung zur Bodenlockerung**
Soil-working implement mounted on a tractor
Appareil pour le travail de la terre monté sur tracteur

(30) Priorität: 16.08.1980 DE 3031018
(43) Veröffentlichungstag der Anmeldung: 24.02.1982
(73) Patentinhaber: KUHN S.A., F-67706 Saverne Cedex (FR)
(72) Erfinder: Weichel, Ernst, D-7326 Heiningen (DE)
(74) Vertreter: Patentanwälte Leinweber & Zimmermann

(56) Entgegenhaltungen:
- DE-A- 2 412 824
- DE-A- 2 652 739
- FR-A- 1 088 474
- FR-A- 2 277 521
- FR-A- 2 454 254
- IT-A- 1 029 046
- JP-B-47 032 525
- NL-A- 6 511 515
- US-A- 3 001 590
- US-A- 4 081 035
- Prospekt d. Firma Weichel "Schichtengrubber + Rotoregge"

## Beschreibung

Die Erfindung betrifft eine an einem Traktor anbaubare Vorrichtung zur Bodenlockerung nach dem Oberbegriff des Anspruchs 1. Eine derartige Vorrichtung ist aus der IT-A-1029046 bekannt.

Eine weitere Vorrichtung zur Bodenlockerung ist aus der DE - A - 26 52 739 bekannt. Diese bekannte Vorrichtung weist ein Tragrohr auf, das aus zwei Tragrohrteilen besteht, von denen jedes mit einem Rahmenrohr bestückt ist, das sich in Fahrtrichtung relativ weit nach vorn erstreckt. Die beiden Tragrohrteile sind einerseits mittels Zweier Traversen und andererseits mittels des die vorderen Enden der beiden Rahmenrohre verbindenden Anbaudreiecks miteinander verbunden. Im Bereich der Schleppermitte erstrecken sich die beiden Tragrohrteile relativ nah aneinander und jedes Tragrohrteil ist noch zusätzlich mittels einer Platte mit einer der zwei Traversen verbunden. Es wird somit eine relativ schmale Aussparung gebildet, die nach oben durch eine der beiden Traversen und seitlich durch die Platten begrenzt ist. Die bekannte Vorrichtung zur Bodenlockerung weist noch Verbindungselemente für die Kupplung motorisch antreibbarer, sich hinter den Lokerungskörpern erstrekkender Arbeitsgeräte auf. Wenn die Vorrichtung zur Bodenlockerung mit solchen Arbeitsgeräten kombiniert ist, verläuft durch die gebildete Aussparung eine Gelenkwelle, die die Zapfwelle des Schleppers mit der Eingangswelle des Arbeitsgerätes verbindet.

An jedem Tragrohrteil sind mittels Werkzeugträger Stiele für je einen Lockerungskörper befestigt. Bei dieser bekannten Vorrichtung zur Bodenlockerung weisen die Verbindung der beiden Tragrohrteile sowie die Kupplungselemente, mittels welcher die Vorrichtung zur Bodenlockerung an einem Schlepper kuppelbar ist, sehr viele Teile auf. Demzufolge ist es im Mittelbereich praktisch sehr schwer, verschiedene Stiele für Lockerungskörper anzubringen, um die Vorrichtung zur Bodenlockerung an verschiedene Arbeitsverhältnisse anpassen zu können. Ausserdem erhöhen diese aufwendigen Verbindungs-und Kupplungselemente das Eigengewicht der Vorrichtung zur Bodenlockerung sowie deren Herstellungskosten.

Der Erfindung liegt demzufolge die Aufgabe zugrunde, eine Vorrichtung zur Bodenlockerung zu schaffen, die bei sehr stabiler, jedoch relativ einfacher Bauweise eine gute und leichte Anpassung an verschiedene Arbeitsverhältnisse erlaubt.

Die Bodenlockerungsvorrichtung nach der Erfindung, bei der diese Aufgabe gelöst ist, zeichnet sich durch die Merkmale des kennzeichnenden Teiles des Anspruchs 1 aus.

Bei der erfindungsgemässen Vorrichtung zur Bodenlockerung können also sowohl Stiele für Lokkerungskörper an den die Aussparung seitlich begrenzenden Tragplatten als auch an der die Aussparung nach oben begrenzenden Brücke befestigt werden, so dass eine optimale Anpassung an verschiedene Arbeitsverhältnisse sehr leicht möglich ist. Aufgrund der einfachen Bauweise ist diese Möglichkeit im Bereich der Aussparung ohne weiteres gegeben. Diese einfache, jedoch stabile Bauweise wird dadurch erreicht, dass jede Tragplatte zusammen mit zusätzlichen Verstärkungen einen Körper bildet, an dessen vorderem Ende ein Kupplungsbolzen für einen Unterlenker des Schlepperkrafthebers anbringbar ist. und der mit dem Tragrohr und der Brücke verbunden ist, und indem die Kupplungsplatten für den Oberlenker dieses Schlepperkrafthebers an der Brücke selbst angeordnet sind. Die auf die sich in der Aussparung erstreckenden Lockerungskörper wirkenden Kräfte werden dann sozusagen direkt von dem Schlepperkraftheber aufgenommen.

Vorzugsweise sind die durch jede Tragplatte und die zugehörigen Verstärkungen gebildeten Körper als Hohlkörper ausgebildet.

In besonders zweckmässiger weiterer Ausgestaltung der Erfindung liegt das vordere Ende jeder Tragplatte, wo ein Kupplungsbolzen für einen Unterlenker des Schlepperkrafthebers anbringbar ist. tiefer als das Tragrohr und die Brücke. Dadurch lässt sich erreichen, dass das Tragrohr in relativ grossem Abstand vom Boden verläuft, so dass keine Verstopfungen auftreten können, wenn sich Ernterückstände auf der Bodenoberfläche befinden.

Gemäss einer Ausführungsform der Erfindung weist das Tragrohr zwei Tragrohrteile auf. wobei die Brücke höher liegt als diese zwei Tragrohrteile und die Tragplatten sowohl die freien Enden der entsprechenden Tragrohrteile seitlich abschliessen, als auch wenigstens die Vorder - und Unterseite der Brücke umfassen.

Weitere Merkmaie der Erfindung ergeben sich aus den übrigen Unteransprüchen, sowie aus der folgenden Beschreibung und der Zeichnungen, auf die bezüglich die Offenbarung aller nicht im Text beschriebenen Einzelheiten ausdrücklich verwiesen wird. Es zeigen :
Figur 1 eine Rückansicht in Fahrtrichtung auf ein Gerät mit drei Lokerungskörpern, von denen einer in der Mitte montiert ist,
Figur 2 einen Querschnitt gemäss der Linie AB nach Fig. 1,
Figur 3 einen Querschnitt gemäss der Linie C-D nach Fig.1,
Fig. 4 einen Querschnitt gemäß der Linie E-F nach Fig. 1,

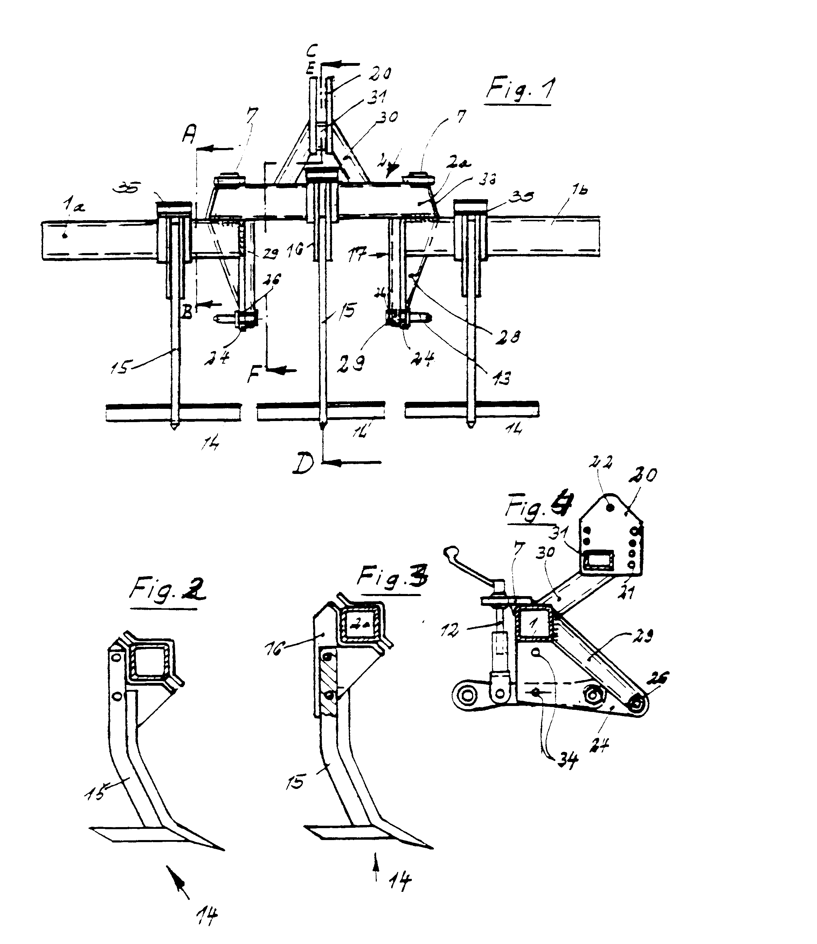

Wie die Figuren 1 bis 4 trotz unterschiedlichem Detail zeigen, besteht das Tragrohr (1) aus zwei in einem Abstand voneinander angeordneten Tragrohrteilen (1 a, 1 b), die an ihren inneren Enden unterhalb der Enden einer als Hohiträger (2a) ausgebildeten Brücke (2) überlappend angeordnet und mit dieser an den Berührungsstellen verschweißt sind. Diese Bauweise ergibt eine nach allen Seiten verwindungssteife Verbindung der Brücke (2) mit den darunter befindlichen, sich jeweils zur Seite erstreckenden Tragrohrteilen (1 und 1 b). Die inneren Stirnseiten der Tragrohrteile (1 und 1b) werden durch Tragplatten (24) verschlossen, die im rechten Winkel an die Brücke (2) anstoßen und sich in Fahrtrichtung (F) abwärts erstrecken.

Die äußeren Enden der Brücke (2) werden durch Seitenplatten (33) verschlossen, die auch mit der Oberseite des entsprechen den Tragrohrteils, (1 und 1b) verschweißt sind. Konsolen (7) mit an sich bekannten Kugelgelenkaugen für an sich bekannte Verstellspindeln (12) für Folgegeräte sind unmittelbar am oberen Rand der Brücke (2) angeordnet.

Die Tragplatten (24) weisen an ihrem oberen Ende einen winkelförmigen Ausschnitt auf, der an die Vorder- und Unterseiten der Brücke (2) anschließt. Die hintere Kante der Tragplatte (24) verläuft am hinteren Rand des Tragrohres (1) senkrecht nach unten, ihre obere bzw. vordere Kante verläuft vom vorderen oberen Rand der Brücke (2) schräg nach vorne unten. Ihr unterer Rand verläuft zudem etwa waagrecht oder leicht geneigt nach vorne. Am vorderen Ende der Tragplatte (24) ist eine Hülse (26) für einen Kupplungsbolzen (13) befestigt. Die Tragplatte (24) ist außen mit einem U-Profil (28) verstärk, das stirnseitig sowohl an der Brücke (2) als auch an derm entsprechen Tragrohr teil (1 bzw. 1 b) angeschweißt ist und daher zusammen mit der Tragplatte (24) ein konisch zulaufendes Verstärkungs-Rohrprofil bildet. Auf der Innenseite der Tragplatte (24) ist ein weiteres U-Profil (29) angeschweißt, das oben direkt an der Brücke (2) anliegt und mit dieser ebenfalls fest verbunden ist. Am vorderen Ende des U-Profils (29) ist die Hülse (26) angeschweißt, in welcher der Kupplungsbolzen (13) lösbar befestigt wird.

An der Ober- und Vorderseite der Brücke (2) sind weiterhin Hohlstützen (30) angeschweißt, die an ihrem oberen Ende miteinander durch ein kastenförmiges Zwischenstück (31) verbunden sind, das zwei an sich bekannte Lochplatten (20) trägt. die mit Bohrungen (21, bzw. 22) für den Oberlenker des Schleppers bzw. der Folgegeräte versehen sind. Zwischen den kastenförmigen Trägern (30) bleibt dabei soviel Platz an der Brücke (2) frei, daß ein verlängerter Werkzeughalter (16) für einen mittig angeordneten Lockerungskörperstiel (15) angeklemmt werden kann.

Die Tragplatten (24) sind an ihrem hinteren Ende mit wenigstens zwei Anschraubbohrungen (34) für die Stiele (15) je eines Lockerungskörpers (14) versehen, deren obere Enden sich bis unterhalb der Brücke (2) erstrecken.

Dadurch können zwei Lockerungskörperstiele (15), jeweils am Rande, aber innerhalb der Aussparung (17) lösbar befestigt werden.

Dies hat den Vorteil, daß Stiele (15) der Lockerungskörper (14) je nach Anordnung der Werkzeughalter (35) nicht nur vor oder hinter den Tragrohren bzw. der Brücke (2), sondern auch unmittelbar unterhalb letzterer (2) angeordnet werden können. Dies wiederum ermöglicht eine in Fahrtrichtung gesehen geringere Staffelung der Lockerungskörper (14) und damit eine geringere Baulänge des Gesamtgerätes bei geringerem Bauaufwand und gleichmäßigerer Wirkungsweise aller Lockerungskörper (14).

## Patentansprüche

1. An einem Traktor anbaubare Vorrichtung zur Bodenlockerung mit wenigstens einem quer zur Fahrtrichtung (F) angeordneten Tragrohr (1, 1a, 1 b ; 1') für an diesem, mittels Stielen (15 ; 15') starr, aber abnehmbar angeordnete Lockerungskörper (14), an welchem Kupplungsbolzen (13) für je einen Unterlenker und Kupplungsplatten (20) mit Bohrungen (21) für den Oberlenker des Schlepperkrafthebers angebracht sind, und an welchem Verbindungselemente für hinter den Lockerungskörpern (14) angeordnete, motorisch antreibbare Arbeitsgeräte anbringbar sind, wobei die Vorrichtung zur Bodenlockerung eine etwa hinter der Schleppermitte vorgesehene, tunnelförmige Aussparung (17) aufweist, die nach oben durch eine in gleicher Richtung wie das Tragrohr (1, 1 a, 1 b ; 1') verlaufende Brücke (2) und seitlich durch zwei Platten (24) begrenzt wird wobei
a) jede Platte als Tragplatte (24) ausgebildet ist und zusammen mit zusätzlichen Verstärkungen (28, 29) einen Körper bildet, an dessem vorderen Ende einer der Kupplungsbolzen (13) für einen Unterlenker des Schlepperkrafthebers anbringbar ist, und der mit dem Tragrohr (1, 1a, 1b ; 1') und der Brücke (2) verbunden ist,
b) an jeder Tragplatte (24) eine Befestigungsvorrichtung (34) für einen Stiel (15) eines Lockerungskörpers (14) vorgesehen ist,
c) die Kupplungsplatten (20) mit den Bohrungen (21) für den Oberlenker des Schlepperkrafthebers an der Brücke (2) angeordnet sind, und
d) im Bereich der Aussparung (17) wahlweise entweder an jeder Tragplatte (24) ein einziger Stiel (15) für einen Lockerungskörper (14) oder an der Brücke (2) zumindest ein Stiel (15) für einen Lockerungskörper (14) mittels eines an sich bekannten Werkzeugträgers (16) lösbar anbringbar ist, dadurch gekennzeichnet, daß der Werkzeugträger (16) lösbar an der Brücke befestigt ist und das die tunnelförmige Aussparung (17) derart ausgebildet ist, daß durch die Aussparung in wenigstens einer Höhenlage der Vorrichtung zur Bodenlockerung oder des zusätzlichen Arbeitsgerätes eine die Zapfwelle des Schleppers mit der Eingangswelle des Getriebes des Arbeitsgerätes verbindende Gelenkwelle verlaufen kann.

2. Vorrichtung zur Bodenlockerung nach Anspruch 1, dadurch gekennzeichnet, dass jede Tragplatte (24) mit den zusätzlichen Verstärkungen (28, 29) einen Hohlkörper bildet.

3. Vorrichtung zur Bodenlockerung nach einem der Ansprüche 1 oder 2, dadurch gekennzeichnet, dass das vordere Ende jeder Tragplatte (24), wo ein Kupplungsbolzen (13) für einen Unterlenker des Schlepperkrafthebers anbringbar ist, tiefer als das Tragrohr (1, 1 a, 1 b ; 1') und die Brücke (2) liegt.

4. Vorrichtung zur Bodenlockerung nach mindestens einem der Ansprüche 1 bis 3, dadurch gekennzeichnet, dass das Tragrohr (1) zwei Tragrohrteile (1 a, 1 b) aufweist, dass die Brücke (2) höher liegt als diese zwei Tragrohrteile (1a, 1 b), und dass die Tragplatten (24) sowohl die freien Enden der entsprechenden Tragrohrteile (1 a, 1b) seitlich abschliessen als auch wenigstens die Vorder - und Unterseite der Brücke (2) umfassen.

5. Vorrichtung zur Bodenlockerung nach mindestens einem der Ansprüche 1 bis 4, dadurch gekennzeichnet, dass die an jeder Tragplatte (24) vorgesehene Befestigungsvorrichtung für einen Stiel (15) eines Lockerungskörpers (14) wenigstens zwei Anschraubbohrungen (34) aufweist.

6. Vorrichtung nach mindestens einem der Ansprüche 1 bis 5, dadurch gekennzeichnet, dass die auf der Brücke (2) angeordneten Kupplungsplatten (20) mit weiteren Bohrungen (22) für den Oberlenker des mit der Vorrichtung kombinierten Arbeitsgerätes versehen sind.

7. Vorrichtung nach mindestens einem der Ansprüche 1 bis 6, dadurch gekennzeichnet, dass wenigstens zwei Stiele (15) und/oder ihre oberen Enden direkt unterhalb der Brücke (2) angeordnet sind.

## Claims

1. A soil loosening device which can be attached to a tractor and which comprises at least one carrier tube (1, 1 a, 1 b; 1'), which extends transversely to the direction of travel (F), for loosening members (14) which are arranged on said carrier tube rigidly by means of shanks (15; 15') but detachably, on which carrier tube are arranged coupling pins (13) for a respective lower link and coupling plates (20) comprising bores (21) for the upper link of the tractor power lift, and on which carrier tube can be arranged connecting elements for motor- driven tools arranged behind the loosening members (14), wherein the soil loosening device comprises a tunnel-shaped recess (17) which is arranged approximately behind the centre of the tractor and which is upwardly delimited by a bridge (2) extending in the same direction as the carrier tube (1, 1 a, 1 b; 1') and is laterally delimited by two plates (24), wherein:
a) each plate is designed as a carrier plate (24) and together with additional reinforcements (28, 29) forms a body, at the front end of which can be arranged one of the coupling pins (13) for a lower link of the tractor power lift, and which is connected to the carrier tube (1, 1a, 1b; 1') and the bridge (2),
b) an attaching device (34) for a shank (15) of a loosening member (14) is arranged on each carrier plate (24),
c) the coupling plates (20) comprising the bores (21) for the upper link of the tractor power lift are arranged on the bridge (2) and
d) in the region of the recess (17) optionally either one single shank (15) for a loosening member (14) can be arranged on each carrier plate (24) or at least one shank (15) for a loosening member (14) can be arranged on the bridge (2), so as to be detachable by means of a tool carrier (16) known per se
characterised in that the tool carrier (16) is detachably connected to the bridge and in that the tunnel-shaped recess (17) is formed in such a manner that, at least at one level of the soil loosening device or the additional tool, a cardan shaft which connects the power take-off shaft of the tractor to the input shaft of the gear of the tool can extend through the said recess.

2. A soil loosening device as claimed in Claim 1, characterised in that each carrier plate (24) forms a hollow body with the additional reinforcements (28, 29).

3. A soil loosening device as claimed in one of Claims 1 or 2, characterised in that the front end of each carrier plate (24), where a coupling pin (13) for a lower link of the tractor power lift can be arranged, is located at a lower level than the carrier tube (1, 1 a, 1 b; 1') and the bridge (2).

4. A soil loosening device as claimed in at least one of Claims 1 to 3, characterised in that the carrier tube (1) comprises two carrier tube components (1 a, 1 b), that the bridge (2) is located at a higher level than these two carrier tube components (1 a, 1 b), and that the carrier plates (24) laterally terminate the free ends of the corresponding carrier tube components (1a, 1b) and also embrace at least the front side and underside of the bridge (2).

5. A soil loosening device as claimed in at least one of Claims 1 to 4, characterised in that the attaching device, arranged on each carrier plate (24), for a shank (15) of a loosening member (14) comprises at least two threaded bores (34).

6. A device as claimed in at least one of Claims 1 to 5, characterised in that the coupling plates (20) arranged on the bridge (2) are provided with further bores (22) for the upper link of the tool which is combined with the device.

7. A device as claimed in at least one of Claims 1 to 6, characterised in that at least two shanks (15) and/or their upper ends are arranged directly below the bridge (2).

## Revendications

1. Dispositif d'ameublissement du sol pouvant être porté par un tracteur et comportant au moins un tube-support (1, 1a, 1 b ; 1') dirigé transversalement à la direction d'avance (F) pour des éléments d'ameublissement (14) qui y sont fixés de façon rigide, mais néanmoins amovible au moyen de bras (15, 15'), tube-support auquel sont fixés des tourillons d'accouplement (13) pour chacun des bras inférieurs et des plaques d'accouplement (20) munies de trous (21) pour la bielle supérieure du dispositif de levage du tracteur, et auquel on peut fixer des éléments de liaison pour des appareils disposés derrière les éléments d'ameublissement (14) et pouvant être entraînés par un moteur, ledit dispositif d'ameublissement présentant un évidement en forme de tunnel (17) prévu sensiblement derrière le milieu du tracteur et délimité vers le haut par un pont (2) s'étendant dans la même direction que le tube-support (1, 1 a, 1 b ; 1') et latéralement par deux plaques (24), dispositif d'ameublissement dans lequel :
a) chaque plaque est réalisée sous forme de plaque-support (24) et constitue avec des renforts supplémentaires (28, 29) un corps à l'extrémité avant duquel peut être fixé un des tourillons d'accouplement (13) pour un des bras inférieurs du dispositif de levage du tracteur et qui est lié avec le tube-support (1, 1 a, 1 b ; 1') et le pont (2),
b) sur chaque plaque-support (24) est prévu un dispositif de fixation (34) pour un bras (15) d'un élément d'ameublissement (14),
c) les plaques d'accouplement (20) avec les trous (21) pour la bielle supérieure du dispositif de levage du tracteur sont fixées sur le pont (2), et
d) dans le voisinage de l'évidement (17) peut être fixé de manière amovible soit un seul bras (15) pour un élément d'ameublissement (14) à chaque plaque-support (24), soit au moins un bras (15) pour un élément d'ameublissement (14) au pont (2) au moyen d'un porte-outil (16) connu en soi,
caractérisé en ce que le porte-outil (16) est fixé de manière amovible au pont et que l'évidement en forme de tunnel (17) est formé de telle manière qu'il puisse être traversé, dans au moins une position en hauteur du dispositif d'ameublissement ou de l'appareil additionnel, par un arbre articulé liant la prise de force du tracteur avec l'arbre d'entrée du carter d'entraînement de l'appareil.

2. Dispositif d'ameublissement du sol selon la revendication 1, caractérisé en ce que chaque plaque-support (24) forme un corps creux avec les renforcements (28, 29) supplémentaires.

3. Dispositif d'ameublissement du sol selon la revendication 1 ou 2, caractérisé en ce que l'extrémité avant de chaque plaque-support (24), à laquelle peut être fixé un tourillon d'accouplement (13) pour un bras inférieur du dispositif de levage du tracteur, est située plus bas que le tube-support (1, 1a, 1b, 1') et le pont (2).

4. Dispositif d'ameublissement du sol selon l'une au moins des revendications 1 à 3, caractérisé en ce que le tube-support (1) comprend deux tronçons de tube-support (1 a, 1 b), que le pont (2) est situé plus haut que ces deux tronçons de tube-support (1a, 1b), et que les plaques- support (24) délimitent latéralement les extrémités libres des tronçons de tube-support (1 a, 1 b) correspondantes et entourent également au moins la partie avant et la partie inférieure du pont (2).

5. Dispositif d'ameublissement du sol selon l'une au moins des revendications 1 à 4, caractérisé en ce que le dispositif de fixation pour un bras (15) d'un élément d'ameublissement (14) prévu à chaque plaque-support (24) est muni d'au moins deux trous de fixation (34).

6. Dispositif selon l'une au moins des revendications 1 à 5, caractérisé en ce que les plaques d'accouplement (20) fixées sur le pont (2) sont munies d'autres trous (22) destinés à la bielle supérieure de l'appareil combiné avec le dispositif.

7. Dispositif selon l'une au moins des revendications 1 à 6, caractérisé en ce que au moins deux bras (15) et/ou leurs extrémités supérieures sont fixés directement sous le pont (2).
